# EUROPEAN PATENT APPLICATION

(11) **EP 4 390 683 A1**
(43) Date of publication of application: **26.06.2024**
(21) Application number: 23217204.9
(22) Date of filing: 15.12.2023
(51) Int. Cl.: G06F 9/48

(54) **TECHNIQUES FOR MIGRATING CONTAINERIZED WORKLOADS ACROSS DIFFERENT CONTAINER ORCHESTRATION PLATFORM OFFERINGS**

(30) Priority: 19.12.2022 IN 202241073622; 09.02.2023 US 202318107536
(71) Applicant: VMware LLC, Palo Alto, CA 94304 (US)
(72) Inventor: Jigalur, Pradeep Shanmukha, 580023 Hubil, Karnataka (IN); Brito, Rafael, Austin, 78701 (US); Schaefer, Christopher John, Venice, 34292 (US); Rodrigues de Oliveira, Eduardo, Round Rock, 78681 (US); Agarwal, Astha, 244001 Moradabad, Uttar Pradesh (IN); Rani, Divya, Santa Clara, 95051 (US); Gold, Frances, Eugene, 97403 (US); Mishra, Prakash, 560048 Bangalore, Karnataka (IN); Shaik, Subhani, 521201 Nuzvid, Andhra Pradesh (IN)
(74) Representative: Dilg, Haeusler, Schindelmann Patentanwaltsgesellschaft mbH

(57) **Abstract**

The disclosure provides a method for migrating containerized workloads across different container orchestration platform offerings. The method generally includes receiving a migration specification for the workloads identifying at least a source cluster and a destination cluster, wherein the source and destination clusters are provisioned via different container orchestration platform offerings; obtaining a current state of the workloads running on the source cluster based on objects created for the source cluster, wherein the objects comprise a first object supported by the first orchestration platform offering of the source cluster and not the second orchestration platform offering of the destination cluster; applying mutation logic to convert the first object to a second object supported by the second orchestration platform offering of the destination cluster; storing one or more images associated with the containerized workloads on the destination cluster; and configuring the workloads at the destination cluster using the second object.

## Description

### Related Application

The present disclosure relates to techniques for migrating containerized workloads.

Modern applications are applications designed to take advantage of the benefits of modern computing platforms and infrastructure. For example, modern applications can be deployed in a multi-cloud or hybrid cloud fashion, such as, consuming both cloud services executing in a public cloud and local services executing in a private data center (e.g., a private cloud). Within the public cloud or private data center, modern applications can be deployed onto one or more virtual machines (VMs), containers, application services, and/or the like.

A container is a package that relies on virtual isolation to deploy and run applications that access a shared operating system (OS) kernel. Containerized applications, also referred to as containerized workloads, can include a collection of one or more related applications packaged into one or more groups of containers, referred to as pods.

Containerized workloads may run in conjunction with a container orchestration platform that enables the automation of much of the operational effort required to run containers having workloads and services. This operational effort includes a wide range of things needed to manage a container's lifecycle, including, but not limited to, provisioning, deployment, scaling (up and down), networking, and load balancing.

Kubemetes^{®} (K8S^{®}) software is an example open-source container orchestration platform that automates the operation of such containerized workloads. Development and operations teams that choose to deploy Kubernetes today have a variety of distributions to choose from. In particular, teams that decide to run Kubernetes generally don't build Kubernetes from source code, as well as deploy and maintain the Kubernetes services themselves. Instead, a Kubernetes distribution (also referred to herein as a "Kubemetes offering") is often chosen for deployment. Kubernetes distributions simplify deployment and management by providing pre-packaged versions of the Kubernetes platform that are easy to install. Such distributions may also offer built-in management tools to provide administrative functionality that is absent from Kubernetes itself. Such Kubernetes services are available from most of the major cloud providers, including Amazon, Google, Microsoft, etc. In particular, example Kubernetes distributions available today include VMware Tanzu Kubernetes Grid (TKG), Amazon Elastic Kubernetes Service (EKS), Google Kubernetes Engine (GKS), Microsoft Azure Kubernetes Service (AKS), Mirantis Kubernetes Engine (MKE), Red Hat OpenShift, and Project Contour. The cloud provider typically manages the Kubernetes control plane, including provisioning, version updates, load balancing, scaling, patching and monitoring, and often provides technical support services.

However, because these services are specific to each cloud provider, they often pose vendor lock-in risks. Cloud providers integrate these managed services with additional tools on their platforms, and as enterprises adopt those other tools and features, their dependence on that one provider grows. Organizations that have, or plan to have, container deployments within their own data center for hybrid cloud, or to deploy containers as part of a multi-cloud model, may find these cloud provider-specific services problematic.

It should be noted that the information included in the Background section herein is simply meant to provide a context for the discussion of technology described in the Detailed Description. None of the information included in this Background should be considered as an admission of prior art.

### Summary

Various methods are described herein for migrating containerized workloads across different container orchestration platform offerings. The methods generally include receiving a migration specification for the containerized workloads. The migration specification may identify at least a source cluster where the containerized workloads are currently running and a destination cluster where the containerized workloads are to be migrated to. The source cluster may be provisioned via a first container orchestration platform offering, and the destination cluster may be provisioned via a second container orchestration platform offering. Further, the methods generally include obtaining a current state of the containerized workloads running on the source cluster based on objects created for the source cluster. The objects may comprise a first object supported by the first orchestration platform offering of the source cluster and not the second orchestration platform offering of the destination cluster. Further, the methods generally include applying mutation logic to convert the first object to at least a second object supported by the second orchestration platform offering of the destination cluster. Further, the methods generally include storing one or more images associated with the containerized workloads on the destination cluster. Further, the methods generally include configuring the containerized workloads at the destination cluster using the second object.

A non-transitory computer-readable storage medium comprising instructions that cause a computer system to carry out the above methods, as well as a computer system configured to carry out the above methods are also described.

### Brief Description of the Drawings

Figure 1A illustrates a computing system in which embodiments described herein may be implemented.
Figure 1B illustrates an example cluster for running containerized workloads in the computing system of Figure 1A, according to an example embodiment of the present disclosure.
Figure 2 illustrates example operations for workload migration across containerized clusters, according to an example embodiment of the present disclosure.
Figure 3 illustrates an example user interface (UI) for selecting existing clusters for migration, according to an example embodiment of the present disclosure.
Figure 4 illustrates an example UI for initiating workload migration across containerized clusters, according to an example embodiment of the present disclosure.

To facilitate understanding, identical reference numerals have been used, where possible, to designate identical elements that are common to the figures. It is contemplated that elements disclosed in one embodiment may be beneficially utilized on other embodiments without specific recitation.

### Detailed Description

Techniques for the automatic migration of containerized workloads across different container orchestration platform offerings, such as, across different Kubernetes offerings is described herein. Although described with respect to Kubernetes, the techniques described herein may similarly be applied to other container orchestration platforms.

At a high level, the Kubernetes platform is made up of a central database containing Kubernetes objects, or persistent entities, that are managed in the platform. Kubernetes objects are represented in configuration files, such as JavaScript Object Notation (JSON) or YAML files, and describe the intended state of a Kubernetes cluster of interconnected nodes used to run containerized workloads. A node may be a physical machine, or a virtual machine (VM) configured to run on a physical machine running a hypervisor. The intended state of the cluster includes intended infrastructure (e.g., pods, containers, etc.) and containerized workloads that are to be deployed in the cluster. In other words, a Kubernetes object is a "record of intent" - once an object is created, the Kubernetes system will constantly work to ensure that object is realized in the deployment.

There are two categories of objects in Kubernetes: native Kubernetes objects and custom resource definition (CRD) objects (also referred to herein as "custom resources"). Native Kubernetes objects include pods, services, volumes, namespaces, deployments, replication controllers, ReplicaSets, and/or the like which are supported and can be created/manipulated by a Kubernetes application programming interface (API). The Kubernetes API is a resource-based (e.g., RESTful or representational state transfer architectural style) programmatic interface provided via HTTP.

A CRD object, on the other hand, is an object that extends the Kubernetes API or allows a user to introduce their own API into a Kubernetes cluster. In particular, Kubernetes provides a standard extension mechanism, referred to as custom resource definitions, that enables extension of the set of resources and objects that can be managed in a Kubernetes cluster. However, unlike native Kubernetes objects, CRD objects are not necessarily available in a default Kubernetes installation. Instead, CRD objects may be created by different Kubernetes offerings for different purposes.

As such, when migrating and/or redeploying containerized workloads from one Kubernetes cluster (e.g., a source cluster), of a first Kubernetes offering, to another Kubernetes cluster (e.g., a destination cluster), of a second Kubernetes offering, automatic migration of these custom resources may pose issues. For example, in conventional approaches, users may manually migrate their workloads across Kubernetes offerings by copying metadata for their workloads running on the source cluster and apply the copied metadata to the destination cluster. Where workloads to be migrated are large, this manual approach is not scalable, is inefficient, and may inevitably result in human error. Further, where the resources for migration include custom resources supported only by the source cluster, and not the destination cluster, such resources might result in breaking the containerized application when transferred to the destination cluster. For these reasons, and because users are embracing multi-cloud models for deployment of their workloads, automated migration of resources, including custom resources, may be key to increasing efficiency and providing a better user experience for the user.

Accordingly, to provide an automatic migration service for cloud native workloads and custom resources across different Kubernetes offerings, embodiments herein introduce a migration cluster that acts as a temporary Kubernetes cluster and exists during the migration. In certain aspects, the migration cluster includes a migration service orchestrator configured to provide migration services to support resource migrations between Kubernetes environments. Although aspects herein are described with respect to a migration from a non-VMware TKG cluster (e.g., Amazon EKS, GKS, Microsoft AKS, MKE, Red Hat OpenShift, or the like) to a VMware TKG cluster, other migrations may be considered.

In certain aspects, the migration cluster further provides backup and restore services to backup resources at a source cluster (e.g., for a first Kubernetes offering) and restore these resources at a destination cluster (e.g., for a second Kubernetes offering). Backup techniques may be used to capture the state of resources, including custom resources, of the source cluster. Further, restore techniques may be used to prepare these resources at the destination cluster such that the resources restored at the destination cluster may be used to continue operations at the destination cluster.

Restoring resources at the destination cluster may involve the application of mutation logic to mutate CRD objects associated with the source cluster to corresponding supported CRD objects associated with the destination cluster. For example, when migrating Kubernetes workloads from a non-TKG cluster to a TKG cluster, the CRD objects associated with the non-TKG cluster may be converted to TKG CRD objects or native Kubernetes supported objects via the use of one or more mutator plugins. Additionally, in certain aspects, restoring resources at the destination cluster further involves mutating native Kubernetes objects to corresponding supported CRD objects associated with the destination cluster. Further, in certain aspects, restoring resources at the destination cluster involves mutating CRD objects associated with the source cluster to native Kubernetes objects that are supported by all Kubernetes offerings.

A mutator plugin is a piece of software that acts as an add-on to the migration cluster and gives a migration orchestrator of the migration cluster additional functionality to change Kubernetes objects based on criteria of the destination cluster (e.g., where the resources are to be migrated and restored). An example mutator plugin may be a DC-2 Deployment Mutator configured to convert OpenShift's custom resource "DeploymentConfig" to the native Kubernetes resource "Deployment." The example mutator plugin may be used when the source cluster is selected to be a Red Hat OpenShift cluster.

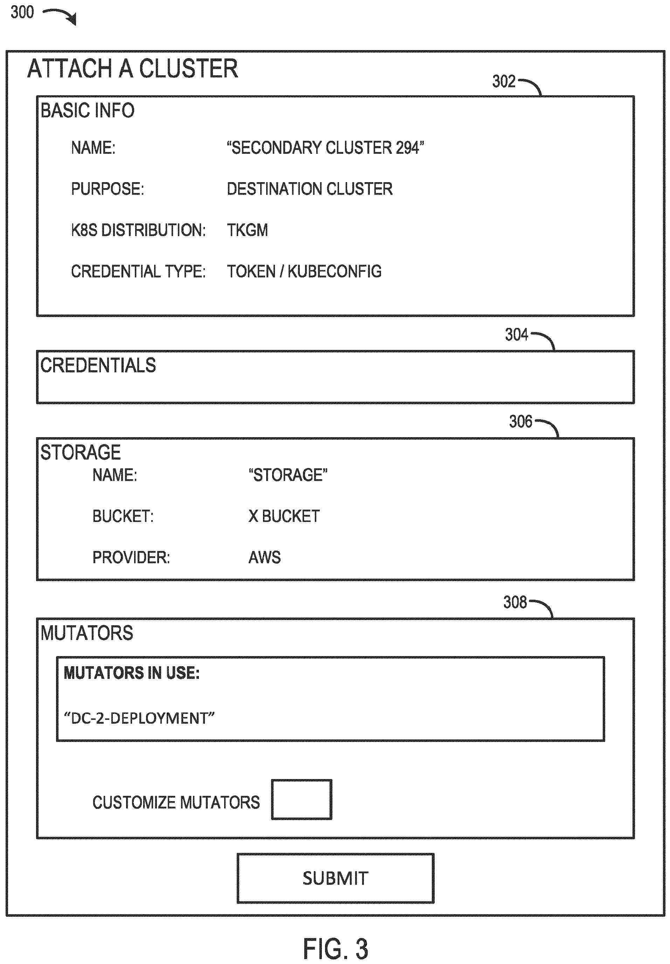

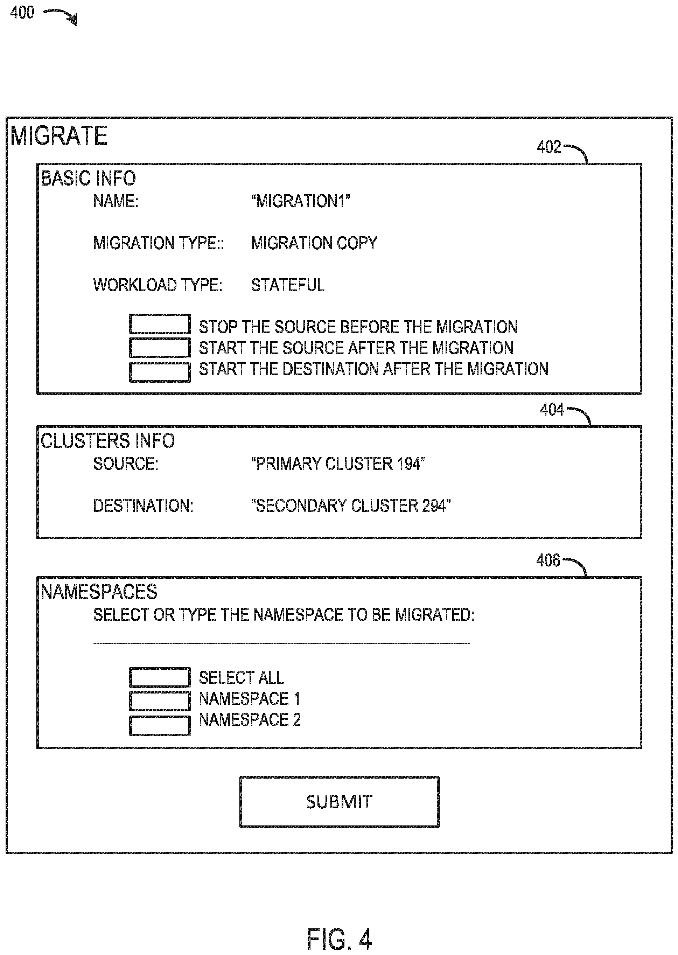

In certain aspects, a user interface (UI) is configured to provide a point at which users are able to manage the automated process for resource migration (e.g., container workload migrations) across Kubernetes offerings. The user interface may be a graphical user interface which allows users to interact with the migration orchestrator of the migration cluster through interactive visual components. In certain aspects, the user interface allow users to, at least, identify the source cluster and/or the destination cluster, specify resources (e.g., namespaces, pods, containers, etc.) to be migrated, customize and/or configure one or more mutators, and specify the type of migration, as described in detail below with respect to Figures 3 and 4.

As such, techniques herein enable an improved user experience when migrating resources across different Kubernetes offerings. In particular, the automatic migration of source cluster native objects to a destination cluster, where the clusters are provisioned via different container orchestration platforms, provides a more efficient and scalable method than conventional methods of copying metadata from the source cluster to the destination cluster. Further, the automatic migration removes risk of human error when copying metadata across such clusters. Additionally, the mechanism described herein to move and mutate source cluster native CRD objects such that they are supported by the destination cluster allows for the migration of such objects which was not previously feasible.

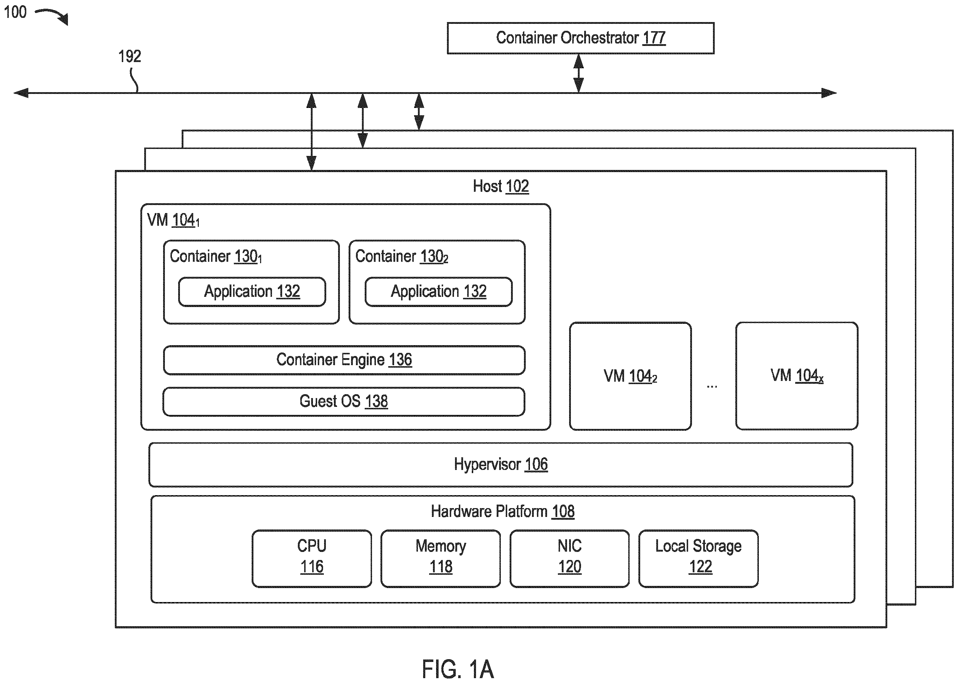

Figure 1A is a block diagram that illustrates a computing system 100 in which embodiments described herein may be implemented. Computing system 100 includes one or more hosts 102 connected by a physical network 192. In particular, physical network 192 enables communication between hosts 102, and/or between other components and hosts 102.

Hosts 102 may be in a single host cluster or logically divided into a plurality of host clusters. Each host 102 may be configured to provide a virtualization layer, also referred to as a hypervisor 106, that abstracts processor, memory, storage, and networking resources of a hardware platform 108 of each host 102 into multiple VMs 104₁ to 104_{N} (collectively referred to as VMs 104 and individually referred to as VM 104) that run concurrently on the same host 102.

Hardware platform 108 of each host 102 includes components of a computing device such as one or more processors (central processing units (CPUs)) 116, memory 118, a network interface card including one or more network adapters, also referred to as NICs 120, and/or storage 122. CPU 116 is configured to execute instructions that may be stored in memory 118 and in storage 122.

In certain aspects, hypervisor 106 may run in conjunction with an operating system (not shown) in host 102. In some embodiments, hypervisor 106 can be installed as system level software directly on hardware platform 108 of host 102 (often referred to as "bare metal" installation) and be conceptually interposed between the physical hardware and the guest operating systems executing in the virtual machines. It is noted that the term "operating system," as used herein, may refer to a hypervisor. In certain aspects, hypervisor 106 implements one or more logical entities, such as logical switches, routers, etc. as one or more virtual entities such as virtual switches, routers, etc. In some implementations, hypervisor 106 may comprise system level software as well as a "Domain 0" or "Root Partition" virtual machine (not shown) which is a privileged machine that has access to the physical hardware resources of the host. In this implementation, one or more of a virtual switch, virtual router, virtual tunnel endpoint (VTEP), etc., along with hardware drivers, may reside in the privileged virtual machine.

Each VM 104 implements a virtual hardware platform that supports the installation of a guest OS 138 which is capable of executing one or more applications. Guest OS 138 may be a standard, commodity operating system. Examples of a guest OS include Microsoft Windows, Linux, and/or the like.

In certain embodiments, each VM 104 includes a container engine 136 installed therein and running as a guest application under control of guest OS 138. Container engine 136 is a process that enables the deployment and management of virtual instances (referred to herein as "containers") by providing a layer of OS-level virtualization on guest OS 138 within VM 104. Containers 130₁ to 130_{Y} (collectively referred to as containers 130 and individually referred to as container 130) are software instances that enable virtualization at the OS level. That is, with containerization, the kernel of guest OS 138, or an OS of host 102 if the containers are directly deployed on the OS of host 102, is configured to provide multiple isolated user space instances, referred to as containers. Containers 130 appear as unique servers from the standpoint of an end user that communicates with each of containers 130. However, from the standpoint of the OS on which the containers execute, the containers are user processes that are scheduled and dispatched by the OS.

Containers 130 encapsulate an application, such as application 132 as a single executable package of software that bundles application code together with all of the related configuration files, libraries, and dependencies required for it to run. Application 132 may be any software program, such as a word processing program.

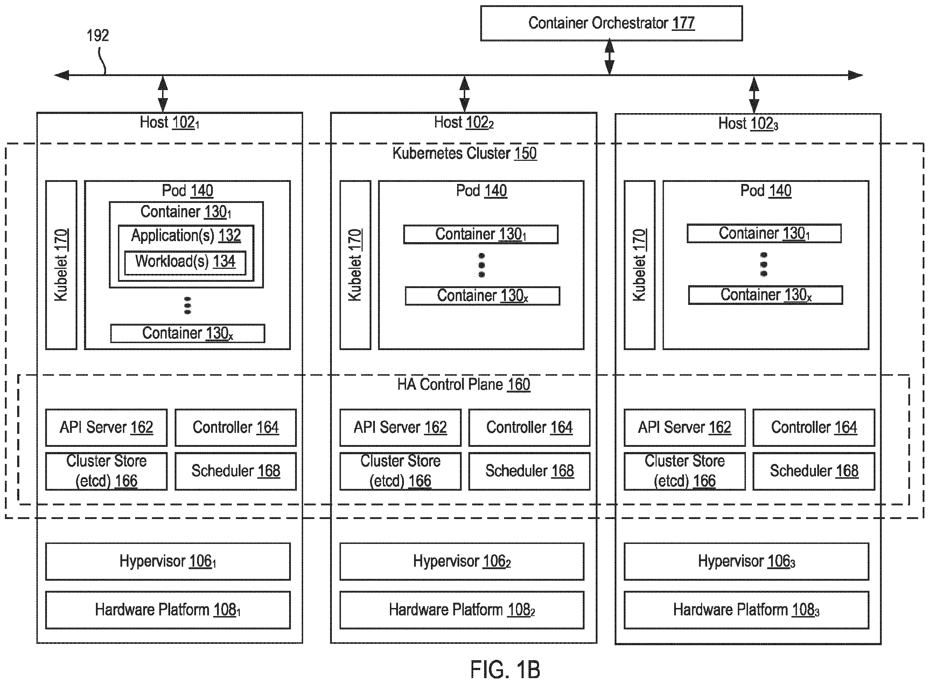

In certain embodiments, computing system 100 can include a container orchestrator 177. Container orchestrator 177 implements an orchestration control plane, such as Kubernetes, to deploy and manage applications and/or services thereof on hosts 102, of a host cluster, using containers 130. For example, Kubernetes may deploy containerized applications as containers 130 and a control plane on a cluster of hosts. The control plane, for each cluster of hosts, manages the computation, storage, and memory resources to run containers 130. Further, the control plane may support the deployment and management of applications (or services) on the cluster using containers 130. In some cases, the control plane deploys applications as pods of containers running on hosts 102, either within VMs or directly on an OS of the host. An example container-based cluster for running containerized workloads is illustrated in Figure 1B. While the example container-based cluster shown in Fig. 1B is a Kubernetes cluster 150, in other examples, the container-based cluster may be another type of container-based cluster based on container technology, such as Docker^{®} clusters.

As illustrated in Figure 1B, Kubernetes cluster 150 is formed from a combination of one or more pods 140 including one or more containers 130, one or more kubelets 170, and a control plane 160. Further, although not illustrated in Figure 1B, Kubernetes cluster 150 may include one or more kube proxies. A kube proxy is a network proxy that runs on each host 102 in Kubernetes cluster 150 that is used to maintain network rules. These network rules allow for network communication with pods 140 from network sessions inside and/or outside of Kubernetes cluster 150.

Kubelet 170 on each host 102 is an agent that helps to ensure that one or more pods 140 run on each host 102 according to a defined state for the pods 140, such as defined in a configuration file. Each pod 140 may include one or more containers 130.

Control plane 160 includes components such as an API server 162, a cluster store (etcd) 166, a controller 164, and a scheduler 168. Control plane 160's components make global decisions about Kubernetes cluster 150 (e.g., scheduling), as well as detect and respond to cluster events (e.g., starting up a new pod 140 when a workload deployment's replicas field is unsatisfied).

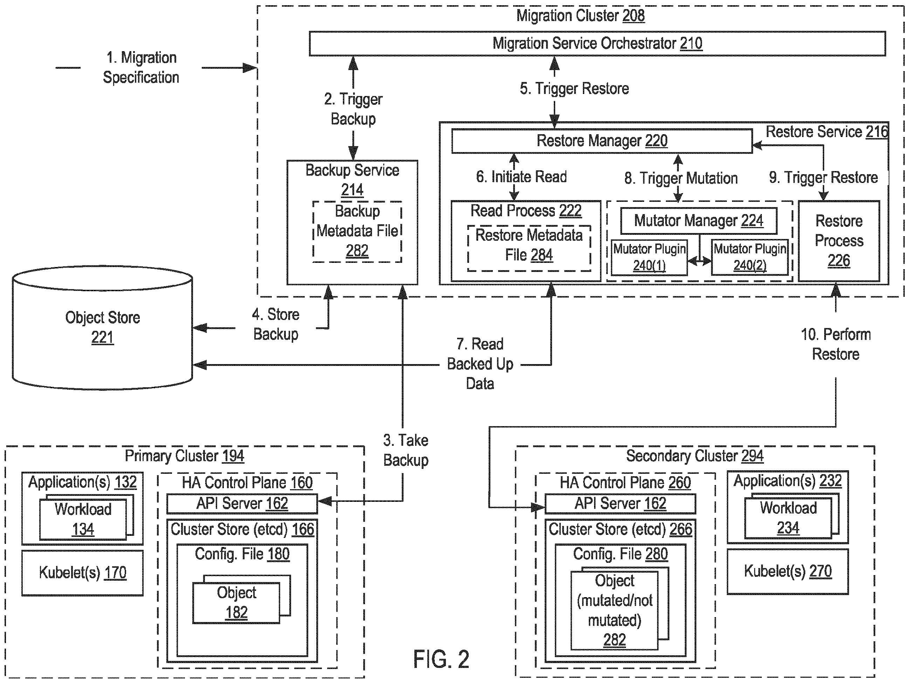

API server 162 operates as a gateway to Kubernetes cluster 150. As such, a command line interface, web user interface, users, and/or services communicate with Kubernetes cluster 150 through API server 162. According to aspects described herein, backup services and restore services may communicate with Kubernetes cluster 150 through API server 162. Backup services and restore services for the migration of resources across Kubbernetes offerings are described in detail below with respect to Figure 2. One example of a Kubernetes API server 162 is kube-apiserver. kube-apiserver is designed to scale horizontally-that is, this component scales by deploying more instances. Several instances of kube-apiserver may be run, and traffic may be balanced between those instances. In the example of Fig. 1B, there are three horizontally-scaled API servers 162, one on each host 102.

Cluster store (etcd) 166 is a data store, such as a consistent and highly-available key value store, used as a backing store for Kubernetes cluster 150 data. In certain aspects, cluster store (etcd) 166 stores a configuration file (e.g., configuration file 180 illustrated in Figure 2) made up of one or more manifests that declare intended system infrastructure and workloads 134 (for application(s) 132) to be deployed in Kubernetes cluster 150. Kubernetes objects (e.g., objects 182 and objects 282 illustrated in Figure 2) can be created, updated and deleted based on configuration file 180 to represent the state of Kubernetes cluster 150. As described above, these objects may be native Kubernetes objects (e.g., available in default Kubernetes installations) and/or custom resources, created specifically for Kubernetes cluster 150 (e.g., based on the underlying cloud native technology used to provision and deploy Kubernetes cluster 150).

Controller 164 is a control plane 160 component that runs and manages controller processes in Kubernetes cluster 150. For example, control plane 160 may have (e.g., four) control loops called controller processes, that watch the state of Kubernetes cluster 150 and try to modify the current state of Kubernetes cluster 150 to match an intended state of Kubernetes cluster 150. In certain aspects, controller processes of controller 164 are configured to monitor for changes to the state of Kubernetes cluster 150.

Scheduler 168 is a control plane 160 component configured to allocate new pods 140 to hosts 102. Additionally, scheduler 168 may be configured to distribute workloads, across containers 130, pods 140, and/or hosts 102 that are assigned to use resources of hardware platform 108. Resources may refer to processor resources, memory resources, networking resources, and/or the like. In some cases, scheduler 168 may schedule newly created containers 130 to one or more of the hosts 102.

In other words, control plane 160 manages and controls every component of Kubernetes cluster 150. Control plane 160 handles most, if not all, operations within Kubernetes cluster 150, and its components define and control Kubernetes cluster 150's configuration and state data. Control plane 160 configures and runs the deployment, management, and maintenance of the containerized applications 132. As such, ensuring high availability of the control plane may be critical to container deployment and management. High availability is a characteristic of a component or system that is capable of operating continuously without failing.

Accordingly, in certain aspects, control plane 160 may operate as a high availability (HA) control plane. Additional details of HA control planes are described in U.S. Application Serial No. 63/347,815, filed on June 1, 2022, and titled "Autonomous Clusters in a Virtualization Computing Environment," which is incorporated herein by reference in its entirety.

As such, Kubernetes cluster 150, illustrated in Figure 1B, provides a platform for running and managing containerized applications/workloads. Kubernetes helps to ensure that the actual state of Kubernetes cluster 150 and the desired state of cluster 150 are always in-sync via continuous monitoring within cluster 150. Whenever the state of cluster 150 changes from what has been defined (e.g., by a user), the various components of Kubernetes work to bring cluster 150 to its defined state, by modifying, creating, or deleting objects of cluster 150.

In some cases, a user may wish to migrate and/or duplicate containerized workloads running in Kubernetes cluster 150 to one or more other clusters, referred to herein as destination clusters. The destination clusters may be Kubernetes clusters created based on a Kubernetes service made available from a cloud provider different than the cloud provider service used to provision and deploy Kubernetes cluster 150 (e.g., Kubernetes cluster 150 may be a cluster provided by Red Hat OpenShift while a destination cluster may be a cluster provided by VMware TKG). For example, a user may wish to migrate and/or duplicate the containerized workloads to the destination cluster(s) to take advantage of cloud-native services provided by the destination cluster(s) that may not be available on the current infrastructure of Kubernetes cluster 150. As described above, a Kubernetes offering developed by one cloud provider may provide different functionality than a Kubernetes offering developed by another cloud provider.

To migrate containerized workloads across different Kubernetes offerings, a migration orchestrator cluster is introduced to backup and restore a state of the source cluster (e.g., pods, containers, workloads, and/or the like) at the destination cluster. In certain aspects, restoration of the state of the source cluster at the destination cluster may involve steps of identifying custom resources created for the source cluster, converting the custom resources of the source cluster to destination cluster custom resources and/or native Kubernetes supported resources, and deploying the converted resources on the destination cluster to continue and/or duplicate operations of the source cluster. In certain other aspects, restoration of the state of the source cluster at the destination cluster may involve steps of identifying native Kubernetes resources created for the source cluster, converting these resources to destination cluster custom resources, and deploying the converted resources on the destination cluster to continue and/or duplicate operations of the source cluster.

Deploying resources at the secondary site may involve obtaining pod and/or container images for pods and/or containers of the source cluster and storing these images on the destination cluster. Additionally, deploying resources at the secondary site may include deploying cluster workloads running on the source cluster with a replicas value indicated for the workloads on the source cluster. For example, a particular workload on a source cluster may have several copies/instances instantiated in the source cluster as different containers, such as for parallelization or load balancing. To deploy a workload on the destination cluster similar to workload on the source cluster (e.g., having a same number of instances), the workload may be configured at the destination cluster using the replicas value indicated for the workload on the source cluster. Example backup and restore services provided by the migration orchestrator cluster are described in more detail with respect to Figure 2.

For example, Figure 2 illustrates example operations for cluster resource migration across containerized clusters, according to an example embodiment of the present disclosure. As illustrated in Figure 2, a primary container-based cluster 194 (subsequently referred to herein as "primary cluster 194") (e.g., such as Kubernetes cluster 150 illustrated in Figure 1B) may be formed from a combination of one or more applications 132 and corresponding workloads 134, one or more kubelets 170, and a control plane 160. Primary cluster 194 may be running on a first site that is a set of one or more containers of one or more pods running on nodes in a first datacenter. Primary cluster 194 may be a Kubernetes cluster provisioned and deployed via a first container orchestration platform (e.g., provided by a first cloud provider). For ease of explanation, it may be assumed that primary cluster 194 is an OpenShift cluster provided by Red Hat.

An administrator for workloads 134 running in primary cluster 194 may desire to migrate these workloads to a secondary container-based cluster 294 (subsequently referred to herein as "secondary cluster 294") deployed on a second site. The second site may be a set of one or more containers of one or more pods running on nodes in the first datacenter (e.g., where primary cluster 194 is running) or a second datacenter. Secondary cluster 294 may be a Kubernetes cluster provisioned and deployed via a second container orchestration platform (e.g., provided by a second cloud provider) different than the first container orchestration platform used to provision and deploy workloads 134 running on primary cluster 194.

To perform migration operations, a migration cluster 208 may be deployed on a third site, where the third site comprises a set of one or more containers of one or more pods running on nodes in the first datacenter, the second datacenter, or a third datacenter. Migration cluster 208 includes a migration service orchestrator 210, backup service 214, and restore service 216. Migration service orchestrator 210 is configured to connect, over a network, (1) backup service 214 to primary cluster 194 and (2) restore service with secondary cluster 294. Further, migration service orchestrator 210 is configured to coordinate with backup service 214 and restore service 216 to (1) trigger backup service 214 to perform backup operations of primary cluster 194 and (2) trigger restore service 216 to perform restore operations of primary cluster 194 at secondary cluster 294. As described above, restore operations may include the application of mutation logic by restore service 216 to custom resources of primary cluster 194 to convert these custom resources to corresponding resources that may be supported by secondary cluster 294.

In certain aspects, migration service orchestrator 210 is configured to receive a migration specification from a user. The migration specification received by migration service orchestrator 210 may include an indication of two clusters which are to be used in the migration operations. In this example, the migration specification received by migration service orchestrator may indicate that primary cluster 194 is to be the source cluster and secondary cluster 294 is to be the destination cluster for the migration. Further, the migration specification may include information about primary cluster 194 and secondary cluster 294 that may be used by migration service orchestrator 210 to (1) connect backup service 214 over a network to primary cluster 194 for backup of resources of primary cluster 194 and (2) connect restore service 216 over the network to secondary cluster 294 for restore of the resources on secondary cluster 294. In certain aspects, a user (e.g., administrator) may provide this information to migration service orchestrator 210 via a UI.

For example, Figure 3 illustrates an example UI 300 for selecting existing clusters for migration. As illustrated in Figure 3, a user may use example UI 300 to attach (e.g., register) clusters for migration. Example UI 300 may prompt the user to enter basic information 302 for a cluster that is to be attached. Basic information 302 may include a name of the cluster that is to be attached, a purpose of the cluster (e.g., whether the cluster is being attached as the source cluster or the destination cluster of the migration), the Kubernetes distribution of the cluster (e.g., VMware TKG, Amazon EKS, GKS, etc.), and a credential type of the cluster (e.g., type of credentials supported and that can be used to authenticate against the cluster, for example, tokens, kubeconfig files, username and passwords, etc.).

Example UI 300 may further prompt the user to enter credential information 304 for the cluster based on the credential type selected for the cluster. Additionally, in certain aspects, example UI 300 may prompt the user to identify the storage 306 which is to be used for the migration. The identified storage may be an object store used by backup service 214 to store backed up resources for a source cluster, which may later be read by restore service 216 to perform restore of the resources on a destination cluster. To identify the storage, example UI 300 may prompt a user to enter a name of the storage that is to be used for backup and restore operations, a bucket, and/or a provider of the storage (e.g., Amazon Web Services (AWS)).

In cases where the cluster identified in example UI 300 is a destination cluster, the user may further customize and/or configure mutator plugins that are to be used by restore service 216 during the migration. In particular, the mutator plugins identified by the user may be used during migration to convert custom resources of a source cluster to resources (e.g., custom resource and/or Kubernetes native resources/objects) that are supported by a destination cluster involved in the migration. Additionally, or alternatively, the mutator plugins identified by the user may be used during migration to Kubernetes native resources/objects of a source cluster to custom resources that are supported by the destination cluster. As such, the plugins identified may be plugins which convert custom resources/Kubernetes native resources to resources that are usable by the Kubernetes distribution identified for the destination cluster (e.g., in basic information 302).

One example mutator plugin that may be configured is a DC-2-Deployment mutator. The DC-2-Deployment mutator may be configured to convert OpenShift's custom resource "DeploymentConfig" to a native Kubernetes resource "Deployment" when the source cluster identified for the migration is a Red Hat OpenShift cluster.

Another example mutator plugin that may be configured is a Route-2-HTTPProxy mutator. The Route-2-HTTPProxy mutator may be configured to convert OpenShift's custom resource "Route" to a Project Contour resource "HTTPProxy" when the source cluster identified for the migration is a Red Hat OpenShift cluster and the destination cluster identified for the migration is a Project Contour cluster.

Another example mutator plugin that may be configured is an SCC-2-PSP mutator. The SCC-2-PSP mutator may be configured to convert OpenShift's custom resource "SecurityContextConstraints (SCC)" to a native Kubernetes resource "Pod Security Policy (PSP)" when the source cluster identified for the migration is a Red Hat OpenShift cluster.

Another example mutator plugin that may be configured is an Ingress-2-HTTPProxy mutator. The Ingress-2-HTTPProxy mutator may be configured to convert a native Kubernetes resource "Ingress" to a Project Contour resource "HTTPProxy" when the destination cluster identified for the migration is a Project Contour cluster.

Other example mutator plugins, beyond those listed herein, may be considered and selected by a user via example UI 300 to (1) convert custom resources of a Kubernetes distribution of a source cluster to custom resources of another Kubernetes distribution of a destination cluster, (2) convert native Kubernetes resources to custom resources for a Kubernetes distribution of a destination cluster, and/or (3) convert custom resources for a Kubernetes distribution of a source cluster to native Kubernetes resources.

For the illustrated example in Figure 3, a user may use example UI 300 to register secondary cluster 294 as the destination cluster for the migration. As described above, secondary cluster 294 is a TKG cluster; thus, the user may indicate this information in example UI 300. Further, the user may select one or more mutators for the migration of resources to secondary cluster 294 given secondary cluster 294 is identified as the destination cluster. A mutator selected by the user may be DC-2-Deployment mutator. This mutator may be selected by the user because the source cluster (e.g., primary cluster 194) for the migration is a Red Hat OpenShift cluster and the destination cluster (e.g., secondary cluster 294) for the migration is a VMware TKG cluster. Accordingly, where primary cluster 194 includes one or more OpenShift custom resources "DeploymentConfig," DC-2-Deployment mutator may be used to convert these custom resource to native Kubernetes resources "Deployment" that are supported by secondary cluster 294.

Referring back to Figure 2, in certain aspects, the migration specification received by migration service orchestrator 210 further includes details about the migration of resources from primary cluster 194 to secondary cluster 294. For example, Figure 4 illustrates an example UI 400 used to execute a migration. As illustrated in Figure 4, a user may use example UI 400 to (1) provide details about the migration and (2) initiate the migration of resources from primary cluster 194 to secondary cluster 294.

Example UI 400 may prompt the user to enter basic information 402 for the migration. Basic information 402 may include a name of the migration, which may be used for later identification of the migration, a migration type, and a workload type to be specified by the user.

Migration types that may be selected by the user include copy migration, dry run migration, move migration, stage migration, and disaster recovery migration. Copy migration may be used to copy workloads from the source cluster to the destination cluster and instantiate/launch (e.g., set replicas to a non-zero value) these workloads at the destination cluster. Copy migration may be considered a hot migration given that workloads on the source cluster are to remain active and that no downtime is required for the migration. Dry run migration may be used to walk through a migration in advance of performing the actual migration. Similar to copy migration, move migration may be used to copy workloads from the source cluster to the destination cluster and instantiate these workloads at the destination cluster; however, move migration may be considered a cold migration. In other words, workloads running on the source cluster may be scaled down during migration and may stay down after the migration of the workloads to the destination cluster. Stage migration may be used may be used to prepare workloads from the source cluster to the destination cluster. In certain aspects, preparing workloads at the secondary site includes deploying workloads of the primary cluster with zero replicas at the second site. Accordingly, should an event occur on the primary cluster, these workloads on the secondary cluster may be instantiated by updating the replicas value to a non-zero value. Disaster recovery migration is similar to stage migration; however, disaster recovery migration may be continuously performed based on a user-defined schedule.

Workload types specified by the user in example UI 400 indicate whether the workloads will be backed up with persistent volumes (e.g., where the user selects the workload type as "stateful") or not backed up with persistent volumes (e.g., where the user selects the workload type as "stateless"). A persistent volume may be a virtual disk (also referred to as a "container volume") that, as is known in the art, is an abstraction of a physical storage disk that a container accesses using input/outputs (I/Os) as though it was a physical disk. The purpose of a persistent volume is to exist independent from its container; therefore, when the container is removed, the container volume, and corresponding virtual disk file, is not automatically removed.

Further, basic information 402 may prompt the user to specify whether workloads running on the source cluster are to be stopped prior to the migration, whether workloads on the source cluster are to be started after the migration, and/or whether workloads on the destination cluster are to be started after the migration. In this context "stop" refers to the scaling down of workloads (e.g., quiescing) while "start" refers to the scaling up of workloads.

Example UI 400 may further prompt the user to enter cluster information 404 for the migration. Cluster information entered by a user may include specifying the source cluster and the destination cluster (e.g., previously registered via example UI 300). In this example, a user specifies primary cluster 194 as the source cluster and secondary cluster 294 as the destination cluster.

In some cases, instead of migrating all namespaces, and their corresponding workloads, of the source cluster to the destination cluster, a user may select less than all of the namespaces for migration. For example, using example UI 400, a user may identify which namespaces are to be migrated by selecting particular namespaces in the namespaces prompt 406 of example UI 400. Although not illustrated, in some cases, specific containers and/or workloads may be selected such that less than all containers and/or workloads of the source cluster are migrated to the destination cluster to provide further granularity in the migration selection.

Migration service orchestrator 210 may use information specified in example UI 400 to carry out the migration from the identified source cluster to the identified destination cluster. More specifically, migration service orchestrator 210 may use information provided in the received migration specification to determine when to trigger backup service 214 and restore service 216 to perform the migration.

Additionally, in certain aspects, migration specification received by migration service orchestrator 210 further provides details about a backup schedule and/or a restore schedule for primary cluster 194. In some cases, the backup and/or restore schedules indicate a frequency of incremental backup and/or incremental restore to occur for primary cluster 194 (e.g., every thirty minutes). In some cases, the backup and/or restore schedules indicate that restore operations are to occur subsequent to performing backup operations (e.g., immediately after and incremental backup is performed), while in some other cases, the backup and/or restore schedules may indicate that backup and restore operations are to be performed concurrently. Migration service orchestrator 210 may use information provided in the received migration specification to determine when to trigger backup service 214 and restore service 216 to perform incremental backup and restore of primary cluster 194 for the indicated migration, where incremental backup and restore techniques are used.

As illustrated at the second operation in Figure 2, after receiving the migration specification, migration service orchestrator 210 may trigger backup service 214 to perform backup (e.g., in some cases, incremental backup) of primary cluster 194.

In response to the trigger, backup service 214 may take a backup of primary cluster 194, at the third operation illustrated in Figure 2, and, in some cases, store the backup data for primary cluster 194 in an object store 221, at the fourth operation illustrated in Figure 2. More specifically, backup service 214 may determine a current state of primary cluster 194 and may use the determined state to create one or more objects for storage in object store 221. The created object(s) may be persistent entities used to represent the current, desired state of primary cluster 194.

In certain aspects, to determine the current state of primary cluster 194, backup service 214 communicates with API server 162 of primary cluster 194. API server 162 then communicates with kubelet(s) 170 to determine a current state of primary cluster 194. Kubelet(s) 170 may access configuration file 180 stored in cluster store (etcd) 166 to determine the current state of primary cluster 194. In particular, configuration file 180 may be made up one or more manifests that define an intended state for infrastructure (e.g., pods, containers, etc.) and workloads deployed in primary cluster 194. API server 162 and kubelet(s) 170 or primary cluster 194 may communicate this information included in configuration file 180 to backup service 214.

In cases where incremental backup techniques are used, backup service 214 may determine a change, since a previous backup activity was conducted, in the state of primary cluster 194. For example, backup service 214 may compare the information included in configuration file 180 to information in a backup metadata file 284 maintained by backup service 214 to determine what modifications (e.g., a delta), if any, have been made to the state of primary cluster 194 since a previous backup. Backup service 214 may use the determined delta to resolve differences between backup metadata file 284 and configuration file 180 such that backup metadata file 284 includes the current state of primary cluster 194 (e.g., for purposes of a subsequent backup). Further, in certain aspects, backup service 214 may use the determined delta to create an object for storage in object store 221. The created object may be a persistent entity used to represent the change in the desired state of primary cluster 194 from a previously scheduled backup such that objects in object store 221 represent the current, desired state of primary cluster 194.

In addition to triggering backup service 214 to perform backup operations for primary cluster 194, migration service orchestrator 210 may also trigger restore service 216 to perform restore of primary cluster 194 workloads on secondary cluster 294. Migration service orchestrator 210 may trigger restore service 216, and more specifically a restore manager 220 of restore service 216, at the fifth operation as shown in Figure 2. Restore manager 220 may be configured to manage the overall restore process when triggered by migration service orchestrator 210.

In response to the trigger, at the sixth operation, restore manager 220 may prompt a read process 222 to read backed up data stored for primary cluster 194 in object store 221 and provide restore manager 220 with this data. Read process 222 may determine a current state of primary cluster 194 based on objects stored in object store 221. The objects stored in object store 221 may include native Kubernetes objects and/or CRD objects representing the current, desired state of primary cluster 194. For this example, it may be assumed that both object types exist in object store 221. The CRD objects may be Red Hat OpenShift custom resources given primary cluster 194 is an OpenShift cluster. The Red Hat OpenShift custom resources may include a "DeploymentConfig" custom resource. Read process 222 may provide these objects to restore manager 220.

In certain aspects, read process 222 may determine a current state of primary cluster 194 based on objects stored in object store 221 and compare this state with a current state of secondary cluster 294 (e.g., created at a previously scheduled restore) to determine what modifications, if any, need to be made to the state of secondary cluster 294 such that the state of secondary cluster 294 is consistent with the current state of primary cluster 194 (e.g., to perform an incremental restore). In certain aspects, read process 222 may compare the current state of primary cluster 194 backed up in object store 221 to information in a restore metadata file 284 maintained by restore service 216 to determine what modifications (e.g., delta), if any, need to be made to the state of secondary cluster 294 to make the state of secondary cluster 294 consistent with the current state of primary cluster 194. Accordingly, the objects provided to restore manager 220 may be objects which represent the determined delta.

Restore manager 220 may sort through each of the objects and identify which objects are native Kubernetes objects and which objects are custom resources of Red Hat OpenShift such that the identified custom resources may be converted to resources supported by secondary cluster 294 (e.g., converted to Kubernetes native resources and/or VMware TKG custom resources, both of which are supported by secondary cluster 294). For the objects identified as OpenShift custom resources, restore manger 220 may trigger, at the eighth operation, mutator manager 224 to perform mutation on these identified objects.

Mutator manager 224 may be configured to manage the overall mutation process when triggered by restore manager 220. In particular, mutator manager 224 may be configured to assign the identified objects for mutation to their corresponding mutator plugin 240. Mutator plugins 240 may be plugins selected by a user via example UI 300 (e.g., for mutators 308) illustrated in Figure 3. Mutator plugins 240 may be plugins that have been previously registered with mutator manager 224 prior to, at least, mutator manager receiving the trigger to perform mutation at the eighth operation.

In this example, restore manager 220 identifies that Red Hat OpenShift custom resource "DeploymentConfig" created for primary cluster 194 is not supported by secondary cluster 294 (e.g., a VMware TKG cluster). Thus, restore manager 220 determines that this custom resource needs to be converted to an object that can be supported by secondary cluster 294 prior to restoration of this object on secondary cluster 294. Accordingly, restore manager 220 triggers mutator manager 224 to mutate the "DeploymentConfig" custom resource. Mutator manager 224 may assign the "DeploymentConfig" custom resource to a mutator plugin 240(1) configured to convert this particular resource. For example, the mutator plugin 240(1) used is a DC-2 Deployment Mutator configured to convert OpenShift's custom resource "DeploymentConfig" to the native Kubernetes resource "Deployment." This plugin was previously registered with mutator manger 224 based on selection of this mutator by a user via example UI 300. DC-2 Dployment Mutator may convert the "DeploymentConfig" custom resource to a native Kubernetes resource "Deployment," and subsequently provide this converted resource to mutator manger 224. Restore manager 220 may then receive this converted resource from mutator manger 224. A similar process may occur for all custom resources determined, by restore manager 220, not to be supported by secondary cluster 294.

Restore service 216 may subsequently perform the restore of these objects by triggering, at the ninth operation, restore process 226 to make changes, at the tenth operation, to the state of secondary cluster 294 (e.g., to match the state of primary cluster 194). In certain aspects, making changes to the state of secondary cluster 294 includes modifying resources/objects defined in one or more manifest files of configuration file 280 stored in cluster store (etcd) 266 at secondary cluster 294. In certain aspects, resources/objects of configuration file 280 are modified to update system infrastructure and workloads 234 of secondary cluster 294 such that the intended state of secondary cluster 294 matches the current state of primary cluster 194. Subsequently, the updated state of secondary cluster 294 may be implemented. In certain aspects, implementing the updated state involves obtaining pod and/or container images to be deployed in secondary cluster 294 and storing these images on the secondary site.

Further, in certain aspects, implementing the updated state involves deploying and launching workloads 234 defined by configuration file 280 with non-zero replicas on secondary cluster 294. For example, a particular workload 134 on primary cluster 194 may have several copies/instances instantiated in primary cluster 194 as different containers 130, such as for parallelization or load balancing. To deploy a workload 234 on secondary cluster 294 similar to workload 134 on primary cluster 194 (e.g., having a same number of instances), workload 234 may be configured at secondary cluster 294 with a same replicas value such that the number of copies/instances instantiated in primary cluster 194 are not instantiated on secondary cluster 294.

In certain other aspects, implementing the updated state involves only deploying (e.g., without launching) workloads 234 defined by configuration file 280 with zero replicas at the secondary site. To deploy a workload 234 on secondary cluster 294 similar to workload 134 on primary cluster 194 (e.g., having a same number of instances) without launching the workload 134, workload 234 may be configured at secondary cluster 294 with a replicas field, for workload 234 in configuration file 280, set to zero. However, in a replicas field of a nested annotations field of configuration file 280, the number of instances of workload 234 to be instantiated in secondary cluster 294 may be defined. Defining the number of instances for workload 234 in the annotations section of configuration file 280 may allow for easier startup of workload 234 (and their requested replicas) at a later time when the user desires to instantiate these workloads on secondary cluster 294. Deploying without launching workloads 234 on secondary cluster 294 may be performed where the migration type for the migration, selected by a user via example UI 400, is a stage migration or a disaster recovery migration.

After workload(s) 234 are started in secondary cluster 294, service requests from a user may be directed to workloads 234 instantiated in secondary cluster 294 on a secondary node 242 (or redirected where workloads 134 on primary cluster 194 are stopped/scaled down, to continue with normal operations).

It should be understood that, for any process described herein, there may be additional or fewer steps performed in similar or alternative orders, or in parallel, within the scope of the various embodiments, consistent with the teachings herein, unless otherwise stated.

The various embodiments described herein may employ various computer-implemented operations involving data stored in computer systems. For example, these operations may require physical manipulation of physical quantities-usually, though not necessarily, these quantities may take the form of electrical or magnetic signals, where they or representations of them are capable of being stored, transferred, combined, compared, or otherwise manipulated. Further, such manipulations are often referred to in terms, such as producing, identifying, determining, or comparing. Any operations described herein that form part of one or more embodiments of the invention may be useful machine operations. In addition, one or more embodiments of the invention also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present invention may be implemented as one or more computer programs or as one or more computer program modules embodied in one or more computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD or other optical media, a magnetic tape, and other optical and non-optical data storage devices. The computer readable medium can also be distributed over a network coupled computer system so that the computer readable code is stored and executed in a distributed fashion.

Although one or more embodiments of the present invention have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope and equivalents of the claims. In the claims, elements and/or steps do not imply any particular order of operation, unless explicitly stated in the claims.

Virtualization systems in accordance with the various embodiments may be implemented as hosted embodiments, non-hosted embodiments or as embodiments that tend to blur distinctions between the two, are all envisioned. Furthermore, various virtualization operations may be wholly or partially implemented in hardware. For example, a hardware implementation may employ a look-up table for modification of storage access requests to secure non-disk data.

Certain embodiments as described above involve a hardware abstraction layer on top of a host computer. The hardware abstraction layer allows multiple contexts to share the hardware resource. In one embodiment, these contexts are isolated from each other, each having at least a user application running therein. The hardware abstraction layer thus provides benefits of resource isolation and allocation among the contexts. In the foregoing embodiments, virtual machines are used as an example for the contexts and hypervisors as an example for the hardware abstraction layer. As described above, each virtual machine includes a guest operating system in which at least one application runs. It should be noted that these embodiments may also apply to other examples of contexts, such as containers not including a guest operating system, referred to herein as "OS-less containers" (see, e.g., www.docker.com). OS-less containers implement operating system-level virtualization, wherein an abstraction layer is provided on top of the kernel of an operating system on a host computer. The abstraction layer supports multiple OS-less containers each including an application and its dependencies. Each OS-less container runs as an isolated process in user space on the host operating system and shares the kernel with other containers. The OS-less container relies on the kernel's functionality to make use of resource isolation (CPU, memory, block I/O, network, etc.) and separate namespaces and to completely isolate the application's view of the operating environments. By using OS-less containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. The term "virtualized computing instance" as used herein is meant to encompass both VMs and OS-less containers.

Many variations, modifications, additions, and improvements are possible, regardless the degree of virtualization. The virtualization software can therefore include components of a host, console, or guest operating system that performs virtualization functions. Plural instances may be provided for components, operations or structures described herein as a single instance. Boundaries between various components, operations and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method for migrating containerized workloads across different container orchestration platform offerings, the method comprising:
receiving a migration specification for the containerized workloads identifying at least a source cluster where the containerized workloads are currently running and a destination cluster where the containerized workloads are to be migrated to, wherein the source cluster is provisioned via a first container orchestration platform offering and the destination cluster is provisioned via a second container orchestration platform offering;
obtaining a current state of the containerized workloads running on the source cluster based on objects created for the source cluster, wherein the objects comprise a first object supported by the first orchestration platform offering of the source cluster and not the second orchestration platform offering of the destination cluster;
applying mutation logic to convert the first object to a second object supported by the second orchestration platform offering of the destination cluster;
storing one or more images associated with the containerized workloads on the destination cluster; and
configuring the containerized workloads at the destination cluster using the second object.

2. The method of claim 1, wherein
the second object is not supported by the first orchestration platform offering of the source cluster or is further supported by the first orchestration platform offering of the source cluster.

3. The method of claim 1 or 2, wherein:
the objects created for the source cluster further comprise a third object supported by both the first orchestration platform offering of the source cluster and the second orchestration platform offering of the destination cluster; and
the method further comprises:
applying the mutation logic to convert the third object to a fourth object supported by the second orchestration platform offering of the destination cluster and not the first orchestration platform offering of the source cluster.

4. The method of any one of the claims 1 to 3, wherein
configuring the containerized workloads at the destination cluster using the second object comprises:
storing, at the destination cluster, an indication of a number of instances of each of the containerized workloads that are running on the source cluster.

5. The method of claim 4, wherein
storing the indication of the number of instances is based on the migration specification indicating a migration type of a stage migration or a disaster recovery migration.

6. The method of any one of the claims 1 to 5, wherein
configuring the containerized workloads at the destination cluster using the second object comprises:
instantiating one or more instances of each of the containerized workloads on the destination cluster using the stored one or more images, a number of the one or more instances being based on a number of instances of the containerized workloads that are running on the source cluster.

7. The method of claim 6, wherein
instantiating the one or more instances of each of the containerized workloads is based on the migration specification indicating a migration type of a copy migration, a dry run migration, or a move migration.

8. The method of any one of the claims 1 to 7, wherein
the migration specification further identifies the containerized workloads for migration based on an identification of a namespace on the source cluster where the containerized workloads are running.

9. The method of any one of the claims 1 to 8, wherein:
the source cluster is running on a first site that is a set of one or more first containers of one or more first pods running on one or more first nodes; and
the destination cluster is running on a second site that is a set of one or more second containers of one or more second pods running on one or more second nodes.

10. A system comprising:
one or more processors; and
at least one memory, the one or more processors and the at least one memory configured to:
receive a migration specification for containerized workloads identifying at least a source cluster where the containerized workloads are currently running and a destination cluster where the containerized workloads are to be migrated to, wherein the source cluster is provisioned via a first container orchestration platform offering and the destination cluster is provisioned via a second container orchestration platform offering;
obtain a current state of the containerized workloads running on the source cluster based on objects created for the source cluster, wherein the objects comprise a first object supported by the first orchestration platform offering of the source cluster and not the second orchestration platform offering of the destination cluster;
apply mutation logic to convert the first object to a second object supported by the second orchestration platform offering of the destination cluster;
store one or more images associated with the containerized workloads on the destination cluster; and
configure the containerized workloads at the destination cluster using the second object.

11. The system of claim 10, wherein
the second object is not supported by the first orchestration platform offering of the source cluster or is further supported by the first orchestration platform offering of the source cluster. and/or wherein
the objects created for the source cluster further comprise a third object supported by both the first orchestration platform offering of the source cluster and the second orchestration platform offering of the destination cluster; and
the one or more processors and the at least one memory are further configured to:
apply the mutation logic to convert the third object to a fourth object supported by the second orchestration platform offering of the destination cluster and not the first orchestration platform offering of the source cluster.

12. The system of claim 10 or 11, wherein
to configure the containerized workloads at the destination cluster using the second object comprises to:
store, at the destination cluster, an indication of a number of instances of each of the containerized workloads that are running on the source cluster;
wherein in particular
storing the indication of the number of instances is based on the migration specification indicating a migration type of a stage migration or a disaster recovery migration.

13. The system of any one of the claims 10 to 12, wherein
to configure the containerized workloads at the destination cluster using the second object comprises to:
instantiate one or more instances of each of the containerized workloads on the destination cluster using the stored one or more images, a number of the one or more instances being based on a number of instances of the containerized workloads that are running on the source cluster;
wherein in particular
instantiating the one or more instances of each of the containerized workloads is based on the migration specification indicating a migration type of a copy migration, a dry run migration, or a move migration.

14. The system of any one of the claims 10 to 13, wherein
the migration specification further identifies the containerized workloads for migration based on an identification of a namespace on the source cluster where the containerized workloads are running;
and/or wherein
the source cluster is running on a first site that is a set of one or more first containers of one or more first pods running on one or more first nodes; and
the destination cluster is running on a second site that is a set of one or more second containers of one or more second pods running on one or more second nodes.

15. A non-transitory computer-readable medium comprising instructions that, when executed by one or more processors of a computing system, cause the computing system to perform operations for migrating containerized workloads across different container orchestration platform offerings, the operations comprising
receiving a migration specification for the containerized workloads identifying at least a source cluster where the containerized workloads are currently running and a destination cluster where the containerized workloads are to be migrated to, wherein the source cluster is provisioned via a first container orchestration platform offering and the destination cluster is provisioned via a second container orchestration platform offering;
obtaining a current state of the containerized workloads running on the source cluster based on objects created for the source cluster, wherein the objects comprise a first object supported by the first orchestration platform offering of the source cluster and not the second orchestration platform offering of the destination cluster;
applying mutation logic to convert the first object to a second object supported by the second orchestration platform offering of the destination cluster;
storing one or more images associated with the containerized workloads on the destination cluster; and
configuring the containerized workloads at the destination cluster using the second object;
wherein in particular
the objects created for the source cluster further comprise a third object supported by both the source cluster and the destination cluster; and
the operations further comprises:
applying the mutation logic to convert the third object to a fourth object supported by the second orchestration platform offering of the destination cluster and not the first orchestration platform offering of the source cluster.
